# DEMANDE DE BREVET EUROPEEN

(11) **EP 4 748 230 A1**
(43) Date de publication de la demande: **27.05.2026**
(21) Numéro de dépôt: 25212313.8
(22) Date de dépôt: 30.10.2025
(51) Int. Cl.: A01M 7/00, A01G 17/02

(54) **UNITÉ DE PULVÉRISATION À CINÉMATIQUE DE DÉPLOIEMENT ET DE REPLI OPTIMISÉE, POUR ENGIN AGRICOLE**

(30) Priorité: 22.11.2024 FR 2412869
(71) Demandeur: Exel Industries, 51200 Epernay (FR)
(72) Inventeur: CARLIER, Yohann, 51480 OEUILLY (FR)
(74) Mandataire: Bandpay & Greuter

(57) **Abrégé**

La présente invention vise une unité de pulvérisation (1), comportant une ossature (2), destinée à former un engin agricole de pulvérisation, et au moins trois modules de diffusion de produit de pulvérisation (50), et comprenant :
- pour chaque module de diffusion de produit de pulvérisation (50), un bras (30, 40), mobile, configuré pour permettre la mobilité des modules de diffusion de produit de pulvérisation (50) par rapport au porteur,
- chaque bras (30, 40) étant relié de façon indépendante à l'ossature (2) par un dispositif de parallélogramme configuré pour monter et descendre le module de diffusion de produit de pulvérisation (50) correspondant, et
- chaque bras latéral (30) étant monté sur l'ossature (2) par l'intermédiaire d'une liaison pivot (P) suivant une direction verticale, pour permettre le déploiement ou le repli des modules de diffusion de produit de pulvérisation (50) latéraux.

## Description

### DOMAINE TECHNIQUE

La présente invention concerne le domaine des engins agricoles, en particulier les machines à vendanger, et vise plus précisément une unité de pulvérisation comprenant des diffuseurs de produit de pulvérisation, notamment couplés à des panneaux de confinement ou à des panneaux récupérateurs, pour équiper un tel engin agricole tel qu'une machine à vendanger. L'unité de pulvérisation selon l'invention présente un agencement et une cinématique de déploiement et de repli optimisés.

### ETAT DE LA TECHNIQUE

Les montages actuels de diffuseurs de produit de pulvérisation, notamment pourvus de panneaux de confinement ou de panneaux récupérateurs, sur des engins agricoles tels que des MAV (pour Machine A Vendanger) présentent des inconvénients, en particulier un porte à faux important, en raison de la présence d'une rampe commune pour toutes les paires de panneaux.

De tels systèmes connus comprennent par ailleurs un système télescopique lourd pour la gestion du réglage de la largeur des rangs de végétation à traiter, notamment des rangs de vignes qui présentent un entraxe compris entre 1,8 m et 3,2 m. L'encombrement et le caractère haut du centre de gravité de telles machines en découlent naturellement.

Dans les systèmes de pulvérisation connus disposant d'une rampe équipée de diffuseurs de pulvérisation déployables, la gestion des devers n'est en outre pas gérée, excepté au moyen de la mise en œuvre lourde et complexe, et induisant un centre de gravité haut ou un porte-à-faux important, de mâts télescopiques indépendants.

Toujours dans l'état de l'art, le réglage de l'écartement entre diffuseurs de produit de pulvérisation d'une même paire, pour tenir compte de l'épaisseur de feuillage du rang de végétation à traiter, implique par ailleurs la mise en œuvre de parallélogrammes déformables ou de bras télescopiques supplémentaires, induisant encore une complexité additionnelle.

Lors d'un demi-tour de l'engin agricole équipé d'un tel système de pulvérisation connu, l'utilisateur est obligé de replier intégralement sa rampe afin de passer entre les rangs de végétation sans les toucher, ce qui induit une perte de temps et réduit donc le rendement de chantier moins bon.

Pour tenter de résoudre ce problème, il est notamment connu le document EP 3934420 B1 un système de pulvérisation modulable comprenant des modules latéraux reliés à l'ossature par des parallélogrammes fixes intégrés à des dispositifs de glissière horizontale, permettant une translation des modules, mais sans dispositif de parallélogramme configuré pour monter et descendre les modules, ne permettant donc pas d'obtenir une solution totalement satisfaisante.

Un but de l'invention est notamment de pallier, au moins en partie, les inconvénients précités.

### PRESENTATION DE L'INVENTION

A cette fin, plus précisément, l'invention a pour objet une unité de pulvérisation agricole, comportant une ossature destinée à coopérer avec une cuve de pulvérisation pour former un ensemble de pulvérisation destiné à être monté sur un porteur, tel qu'une machine à vendanger, pour former un engin agricole de pulvérisation, et au moins trois modules de diffusion de produit de pulvérisation, chaque module de diffusion de produit de pulvérisation s'étendant principalement suivant une direction verticale par rapport au sol.

L'unité de pulvérisation agricole selon l'invention comporte deux modules de diffusion de produit de pulvérisation latéraux, de part et d'autre, et au moins un module de diffusion de produit de pulvérisation central, disposé entre les modules de diffusion de produit de pulvérisation latéraux, et comprenant :
pour chaque module de diffusion de produit de pulvérisation, un bras, mobile, relié à l'ossature d'une part et à un module de diffusion de produit de pulvérisation respectif d'autre part, chaque bras étant configuré pour permettre la mobilité des modules de diffusion de produit de pulvérisation par rapport au porteur,
chaque bras étant relié de façon indépendante à l'ossature de l'unité de pulvérisation par un dispositif de parallélogramme, configuré pour monter et descendre module de diffusion de produit de pulvérisation correspondant, notamment au moyen d'un actionneur, et
chaque bras latéral étant monté sur l'ossature par l'intermédiaire d'une liaison pivot suivant une direction verticale, pour permettre le déploiement ou le repli des modules de diffusion de produit de pulvérisation latéraux suivant la direction transversale.

Grâce à l'invention, on peut piloter les bras respectifs, indépendants, au moyen d'un unique actionneur.

L'utilisation de parallélogrammes permet également de commander la hauteur des diffuseurs de produit de pulvérisation tout en conservant les diffuseurs verticaux, c'est-à-dire parallèles à la végétation à traiter.

Selon un mode de réalisation, les modules de diffusion de produit de pulvérisation comprennent des panneaux de confinement ou des panneaux récupérateurs.

Avantageusement, les deux modules de diffusion de produit de pulvérisation latéraux sont reliées à l'ossature par des bras latéraux respectifs et ledit au moins un module de diffusion de produit de pulvérisation central est relié à l'ossature par un bras central, les modules de diffusion de produit de pulvérisation étant agencés suivant une architecture dite imbriquée, selon laquelle le bras central, situé, suivant une direction transversale de l'engin agricole de pulvérisation, entre les bras latéraux, est plus court que les bras latéraux, le module de diffusion de produit de pulvérisation central étant configuré pour se situer, suivant un axe longitudinal de l'engin agricole de pulvérisation, entre l'ossature et les modules de diffusion de produit de pulvérisation latéraux, dans une position repliée de l'unité de pulvérisation.

L'invention permet ainsi de réduire l'encombrement latéral et longitudinal. De plus, l'unité de pulvérisation selon l'invention s'adapte à différents porteurs et permet de gérer dévers et d'augmenter vitesse de chantier, notamment grâce à des demi-tours plus rapides, grâce à l'indépendance des bras indépendants.

Selon un mode de réalisation, à l'extrémité opposée à celle par laquelle les bras latéraux sont reliés à l'ossature, chaque bras latéral comprend un actionneur monté pivotant suivant un axe vertical, relié au module de diffusion de produit de pulvérisation, et asservi de sorte à conserver un parallélisme entre un axe transverse du module de diffusion de produit de pulvérisation et une direction transversale de l'engin agricole de pulvérisation, autrement dit un parallélisme entre une direction d'avancement du module de diffusion de produit de pulvérisation et un rang de végétation traité.

Avantageusement, le bras central comprend un moyen télescopique pour ajuster la longueur dudit bras central et ainsi la position relative du module de diffusion de produit de pulvérisation central, suivant l'axe longitudinal de l'engin agricole de pulvérisation, par rapport aux modules de diffusion de pulvérisation latéraux, le moyen télescopique étant commandable de sorte à assurer un alignement des modules de diffusion de produit de pulvérisation latéraux et central, suivant une direction transversale de l'engin agricole de pulvérisation.

Avantageusement, les bras latéraux présentent un point d'attache respectif à l'ossature et le bras central présente un point d'attache à l'ossature, le point d'attache des bras latéraux étant plus éloigné des modules de diffusion de produit de pulvérisation correspondants que le point d'attache du bras central, les bras latéraux étant ainsi plus longs que le bras central, notamment au moins deux fois plus long.

Cela permet de réduire le décalage entre modules de diffusion de pulvérisation suivant un axe longitudinal de l'engin agricole.

La fixation des bras latéraux à l'ossature le plus en avant possible permet aussi de faciliter la mise en fonctionnement de la pulvérisation et son arrêt vis-à-vis du rang de végétation à traiter.

Selon un mode de réalisation, au moins un module de diffusion de produit de pulvérisation est une paire de diffuseurs de produit de pulvérisation, les diffuseurs de produit de pulvérisation de chaque paire de diffuseurs de produit de pulvérisation étant configurés pour s'éloigner et se rapprocher latéralement l'un de l'autre, selon une direction transversale de l'engin agricole de pulvérisation, une arche télescopique contrôlant l'écartement entre les diffuseurs de pulvérisation de ladite au moins une paire de diffuseurs de produit de pulvérisation.

Dans ce cas, l'arche télescopique permet de contrôler la distance, à maintenir constante, entre diffuseur et rang de végétation.

Avantageusement, l'arche télescopique comporte un seul actionneur.

Avantageusement, un moyen d'amortissement réglable en détente et en compression, notamment avec des duretés différentes, par exemple un accumulateur, est couplée à chaque actionneur.

L'unité de pulvérisation selon l'invention peut comprendre un support de bras, fixé à l'ossature suivant une transversale de l'engin agricole de pulvérisation, ayant une section en U et configuré pour recevoir, retenir et supporter les bras latéraux dans la position repliée de l'unité de pulvérisation.

Avantageusement, un dispositif de ventilation est monté au sommet de chaque module de diffusion de produit de pulvérisation.

L'invention vise aussi un ensemble de pulvérisation comportant une cuve et une unité de pulvérisation selon l'une des revendications précédentes, l'unité de pulvérisation étant configurée pour être reliée au porteur.

L'invention vise également un engin agricole de pulvérisation comportant un porteur et un ensemble de pulvérisation selon l'invention.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'une vue de dessus d'un ensemble de pulvérisation comprenant une unité de pulvérisation, selon l'invention, en position de repli ;
La figure 2 est une représentation schématique d'une vue de côté d'un ensemble de pulvérisation comprenant une unité de pulvérisation, selon l'invention, en position de repli ;
La figure 3 est une représentation schématique d'une vue de dessus d'un ensemble de pulvérisation comprenant une unité de pulvérisation, selon l'invention, dans laquelle les bras latéraux sont partiellement déployés ;
La figure 4 est une représentation schématique d'une vue de derrière d'un ensemble de pulvérisation comprenant une unité de pulvérisation, selon l'invention ;
La figure 5 est une représentation schématique similaire à la figure 2, les bras latéraux étant davantage déployés ;
La figure 6 est une représentation schématique d'une vue de derrière d'un ensemble de pulvérisation comprenant une unité de pulvérisation, selon l'invention, avec les bras latéraux partiellement déployés ;
La figure 7 est une représentation schématique d'une vue de côté d'une unité de pulvérisation selon l'invention, avec les bras disposés à des niveaux différents ;
La figure 8 est une représentation schématique d'une vue de derrière d'une unité de pulvérisation selon l'invention, avec les bras latéraux déployés à des niveaux différents ;
La figure 9 est une représentation schématique d'une vue de derrière d'une unité de pulvérisation selon l'invention, avec un plus grand écartement entre panneaux récupérateurs d'une même paire de diffuseurs de produit de pulvérisation ;
La figure 10 est une représentation schématique d'une vue de derrière d'un ensemble de pulvérisation comprenant une unité de pulvérisation, selon l'invention, avec les bras latéraux déployés de façon différenciée ;
La figure 11 est une représentation schématique d'une vue de derrière d'un ensemble de pulvérisation comprenant une unité de pulvérisation, selon l'invention, suivante une variante dans laquelle le bras central est équipé d'un moyen télescopique ;
La figure 12 est une représentation schématique d'une paire de diffuseurs de produit de pulvérisation, montrant plus en détail une arche télescopique pour contrôler l'écartement des diffuseurs.

Il faut noter que les figures exposent l'invention de manière détaillée pour permettre de mettre en œuvre l'invention ; bien que non limitatives, lesdites figures servent notamment à mieux définir l'invention le cas échéant.

### DESCRIPTION DETAILLEE DE L'INVENTION

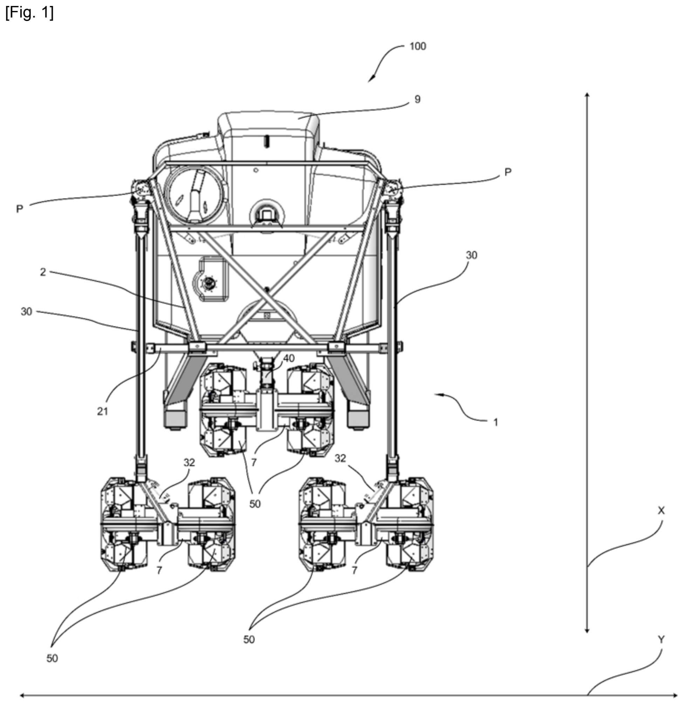

En référence à la figure 1 notamment, la présente invention vise une unité de pulvérisation 1 destinée à être montée sur une cuve 9 pour former un ensemble de pulvérisation 100, lui-même destiné à être monté sur un porteur, pour former un engin agricole de pulvérisation. Le porteur peut être une MAV, un enjambeur, ou tout autre type de porteur adapté. Les diffuseurs de produit de pulvérisation 50 sont, selon le mode de réalisation représenté, couplés et intégrés avec des panneaux récupérateurs. Il va de soi que la présence de panneaux récupérateurs n'est pas indispensables. En outre, les panneaux récupérateurs pourraient aussi être remplacés par des panneaux de confinement.

Vis-à-vis de l'unité de pulvérisation 1, objet de la présente invention et de l'engin agricole correspondant, on définit un repère X, Y, Z dans lequel la direction X correspond à la direction de l'axe longitudinal de l'engin agricole, correspondant également à la direction d'avancement de l'engin agricole lorsqu'il procède au traitement de rangs de végétation.

La direction Y correspond à une direction horizontale et transversale, c'est-à-dire orthogonal à l'axe X.

La direction Z correspond à la direction verticale.

L'ensemble des figures 1 à 10 montre différentes vues et configurations d'une même unité de pulvérisation 1 conforme à la présente invention. En fonction des vues, l'unité de pulvérisation 1 selon l'invention est représentée vue du dessus, de côté ou de derrière, avec les bras qui sont déployés ou non, notamment de façon différenciée.

L'unité de pulvérisation 1 est montée sur une cuve 9 pour former un ensemble de pulvérisation 100, la cuve 9 étant configurée pour contenir un produit de traitement à appliquer sur de la végétation disposée en rang, comme des vignes par exemple.

L'unité de pulvérisation 1 comprend une ossature 2 et des modules de diffusion de produit de pulvérisation 50 reliés à l'ossature 2 par l'intermédiaire de bras. En l'espèce, sur les modes de réalisation représentés, les modules de diffusion de produit de pulvérisation 50 sont systématiquement des paires de diffuseurs de produit de pulvérisation couplées à des panneaux récupérateurs, mais il va de soi que les modules de pulvérisation, notamment deux situés sur l'extérieur, peuvent être de simples descentes comportant des buses de pulvérisation, sans former de paire avec une descente qui lui ferait face, et que les panneaux récupérateurs sont également optionnels.

Les bras sont montés mobiles sur l'ossature 2, en particulier au moyen de parallélogrammes respectifs. Les parallélogrammes sont fixés à l'ossature 2 par une liaison pivot P d'axe vertical suivant l'axe Z. Autrement dit, les bras reliant les paires de diffuseurs de produit de pulvérisation 50 à l'ossature 2 de l'unité de pulvérisation 1 se développent en parallélogrammes qui sont adaptés pour déployer les diffuseurs de pulvérisation.

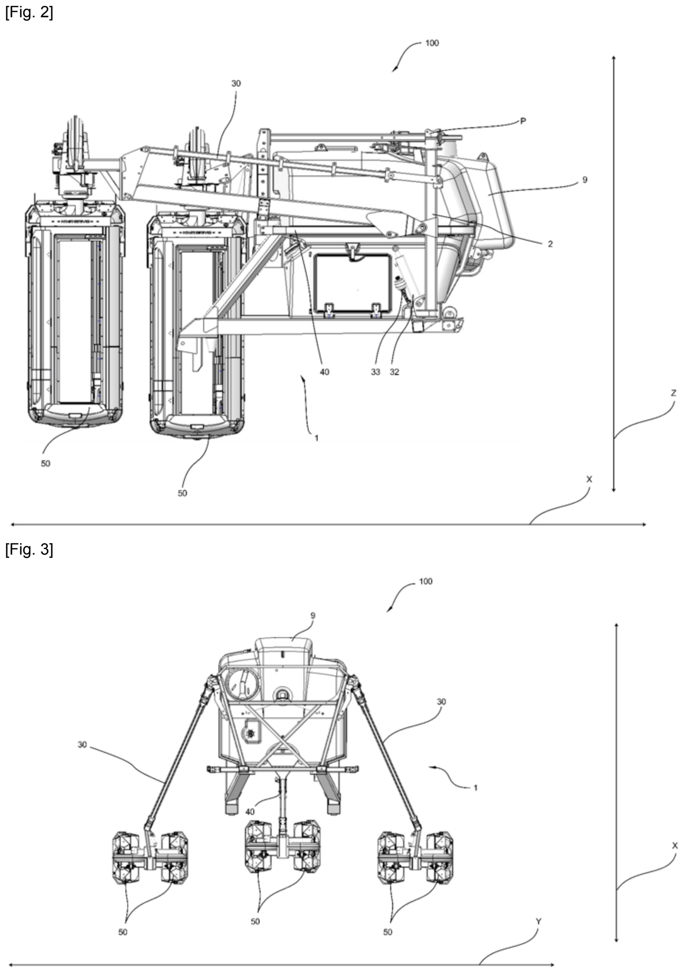

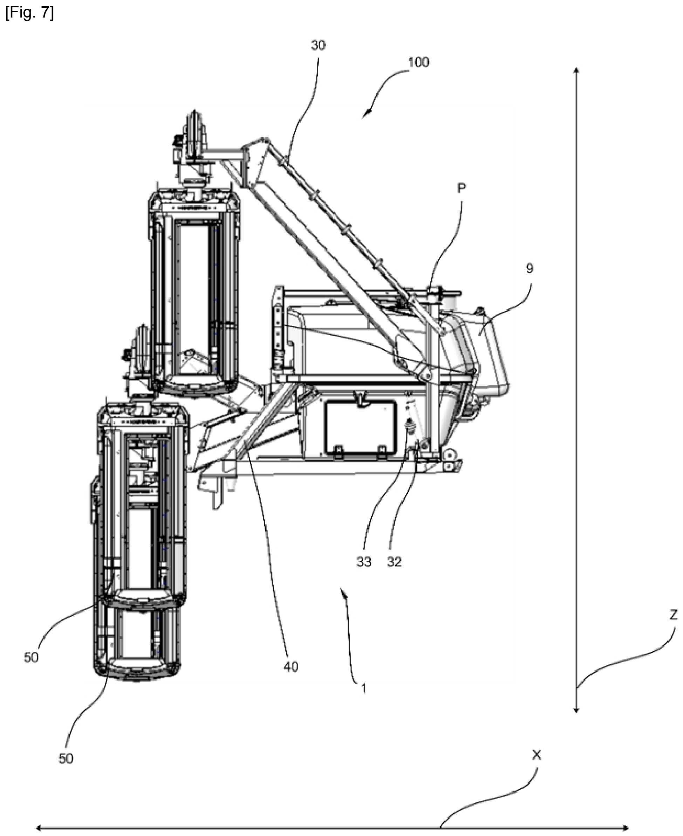

Les parallélogrammes sont notamment visibles sur les figures 2 et 7 correspondant à des vues de côté de l'unité de pulvérisation 1 selon l'invention. Les parallélogrammes sont ici composés de deux bielles et quatre liaisons pivots.

Les paires de diffuseurs sont au moins au nombre de trois. Les paires de diffuseurs situés sur l'extérieur sont dénommés paires de diffuseurs de produit de pulvérisation 50 latéraux. Ils sont fixés à l'ossature 2 par des bras latéraux 30. Les bras latéraux 30 sont adaptés pour se développer en parallélogrammes et pour pivoter autour d'un axe suivant la direction verticale Z, de sorte, d'une part, à permettre de lever et descendre la paire de diffuseurs latéraux correspondants et, d'autre part, à les déployer dans la direction transverse Y. A cette fin, les bras latéraux 30 sont couplés à un actionneur-vérin de levée-descente 31, par exemple électrique, pneumatique ou hydraulique, pour chaque type de déplacement, à savoir la montée-descente d'une part et le pivotement latéral (déploiement et repli) d'autre part. Chaque actionneur-vérin de levée-descente 31 peut être associé à un moyen d'amortissement tel qu'un accumulateur 33. Chaque moyen d'amortissement est de préférence réglable en détente et en compression, notamment avec des duretés différentes.

L'au moins une paire de diffuseurs située entre les paires de diffuseurs de produit de pulvérisation 50 latéraux est dénommée paire de diffuseurs de produit de pulvérisation 50 centraux. Elle est fixée à l'ossature 2 par un bras central 40. Le bras central 40 est adapté pour se développer en parallélogramme de sorte à permettre de lever et descendre la paire de diffuseurs centraux.

Notamment, le bras central 40 est plus court que les bras latéraux 30. Autrement dit, les points d'attache des bras latéraux 30 à l'ossature 2 sont situés davantage vers l'avant de la cuve 9 et de l'engin agricole que le point d'attache du bras central 40 à l'ossature 2. La configuration globale est ainsi dite « imbriquée » au sens où, vu de dessus, comme sur la figure 1, en position replié de l'ensemble des bras, les diffuseurs centraux sont situés entre les diffuseurs latéraux et la cuve 9, et au centre, entre les roues du porteur (non représenté).

L'ossature 2 encadre et supporte la cuve 9 à laquelle elle est destinée à être fixée. Elle sert de piétage aux bras et les bras sont fixés en des points d'ancrage appartenant à l'ossature 2. L'ossature 2 fait également la liaison mécanique entre l'ensemble de pulvérisation 100 et le porteur.

L'ossature 2 peut notamment comprendre un support de bras 21, fixé à l'ossature 2 suivant une transversale de l'engin agricole de pulvérisation, ayant une section en U. Le support de bras 21 permet de recevoir, supporter et retenir les bras latéraux 30 en position de repli. En particulier, le support de bras 21 présente une longueur sensiblement égale au gabarit de l'engin agricole complet. Ainsi, en position de repli, notamment pour le transport sur route, l'unité de pulvérisation 1 est contenue dans le gabarit de l'engin agricole.

L'invention réside ainsi en particulier dans le choix de fixer les bras reliant les paires de diffuseurs de produit de pulvérisation 50 à l'ossature 2 du système de façon indépendante et suivant une géométrie différenciée.

Ainsi, s'agissant des paires de panneaux latéraux, les bras latéraux 30 sont fixés sur l'avant de l'ossature 2, et donc vers l'avant de la cuve 9, permettant d'abaisser le centre de gravité et d'augmenter les envergures atteignables pour les diffuseurs de produit de pulvérisation 50.

La paire de diffuseurs centraux est fixée davantage sur l'arrière de l'ossature 2 et donc de la cuve 9, le bras central 40 étant ainsi plus court que les bras latéraux 30.

Grâce à l'indépendance des bras les uns par rapport aux autres, lors des demi-tour par exemple, l'utilisateur n'est plus contraint de replier la totalité des diffuseurs de produit de pulvérisation 50 mais peut juste relever la ou les paires de diffuseurs nécessaires, pour qu'ils passent au-dessus des rangs de végétation, ce qui permet un gain de temps et une limitation des réglages de largeur lors de la remise des diffuseurs de produit de pulvérisation 50 en position de travail.

Cette cinématique fondée sur des parallélogrammes déformables indépendants permet également de gérer un dévers différent sur chaque rang de végétation à traiter. Il est à noter que le dévers peut notamment être détecté au moyen de capteurs, par exemple à ultrason, mesurant la distance entre le bas des diffuseurs de pulvérisation et le sol. L'unité de pulvérisation 1 peut comprendre une unité de commande pour contrôler la hauteurs des paires de diffuseurs de produit de pulvérisation 50 en fonction des informations mesurées par de tels capteurs.

Selon le mode de réalisation représenté, les bras latéraux 30 sont reliés aux paires de diffuseurs de produit de pulvérisation 50 par l'intermédiaire d'une liaison pivot contrôlé au moyen d'un actionneur-vérin d'asservissement 32, par exemple électrique, pneumatique ou hydraulique, qui peut être couplé à un moyen d'amortissement tel qu'un accumulateur 33, et qui permet d'asservir la paire de diffuseurs de telle sorte que les diffuseurs restent alignés sur une direction transversale Y et parallèles au rang de végétation à traiter qui défile entre lesdits diffuseurs.

Les diffuseurs de produit de pulvérisation 50 d'une paire de diffuseurs sont reliés l'un à l'autre par un moyen de liaison. Ce moyen de liaison est notamment formé par une arche télescopique 7, décrite ci-après.

Les bras sont reliés aux paires de diffuseurs respectives en étant fixés à ces moyens de liaison. En particulier, s'agissant des bras latéraux 30, la fixation des bras latéraux 30 aux moyens de liaison est réalisée via une liaison pivot contrôlée au moyen du vérin-actionneur 32 déjà évoqué.

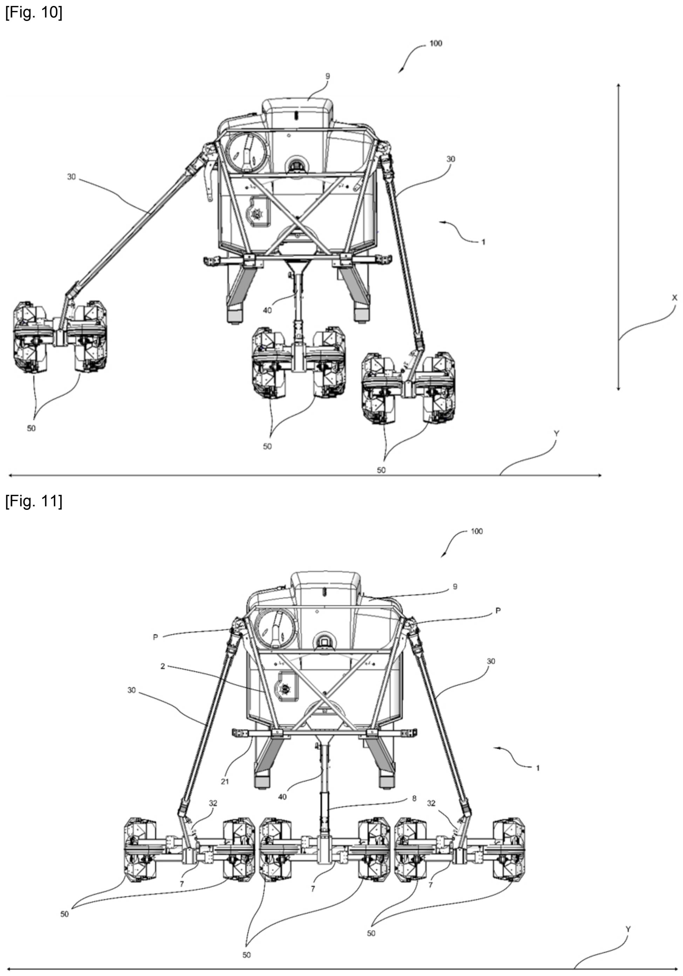

La figure 11 montre une variante de réalisation de l'unité de pulvérisation 1, dans laquelle le bras central 40 est doté d'un moyen télescopique 8, notamment d'une coulisse, pour gérer le positionnement suivant une direction longitudinale X. Ce moyen télescopique 8 permet de maintenir alignées les trois paires de diffuseurs suivant une direction transversale Y.

### Arche télescopique

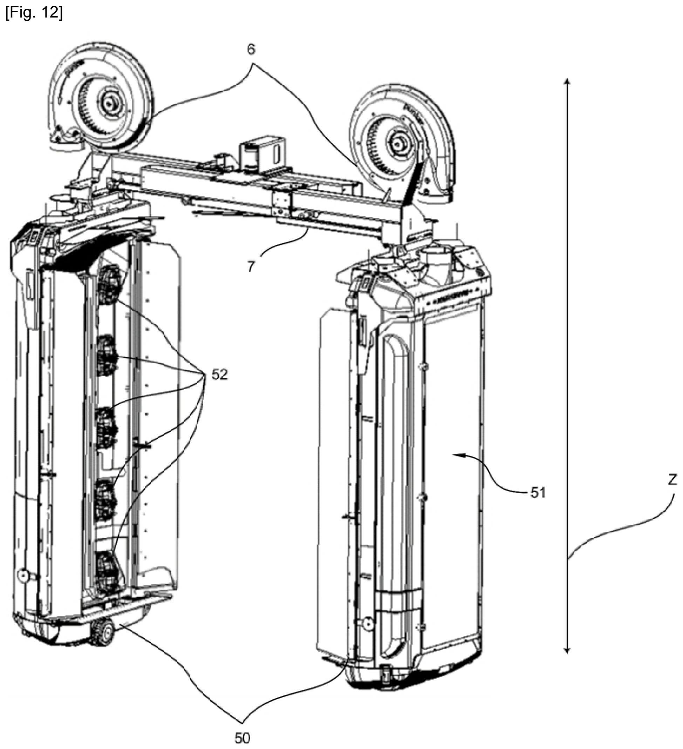

La figure 12 représente une paire de diffuseurs de produit de pulvérisation 50 montrant plus en détail un organe télescopique, dénommé arche télescopique 7, permettant de contrôler l'écartement entre les diffuseurs de produit de pulvérisation 50 d'une paire. L'arche télescopique 7 permet ainsi de gérer la distance entre chaque diffuseur de produit de pulvérisation et la végétation, notamment en s'adaptant à l'épaisseur de végétation. Autrement dit, en contrôlant l'écartement entre diffuseurs d'une paire de diffuseurs de produit de pulvérisation 50 au moyen de l'arche télescopique 7, on contrôle la largeur d'un couloir de pulvérisation.

L'arche télescopique 7 est commandé par un seul vérin-actionneur, ce qui permet d'améliorer la réactivité et la symétrie.

La figure 12 montre clairement que les diffuseurs de de produit de pulvérisation 50 comprennent des buses de pulvérisation 52 et sont ici couplés à des panneaux récupérateurs 51.

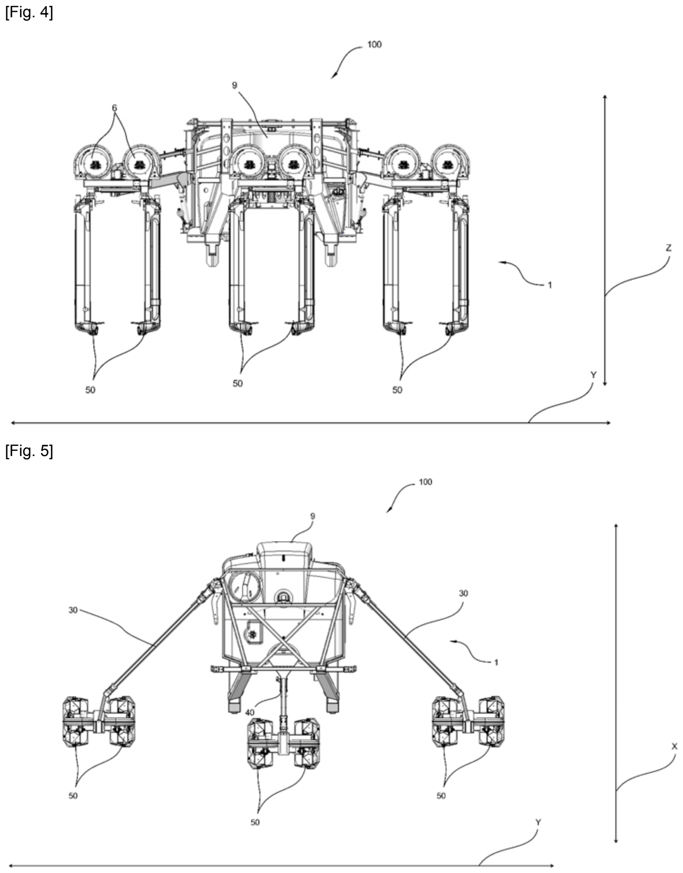

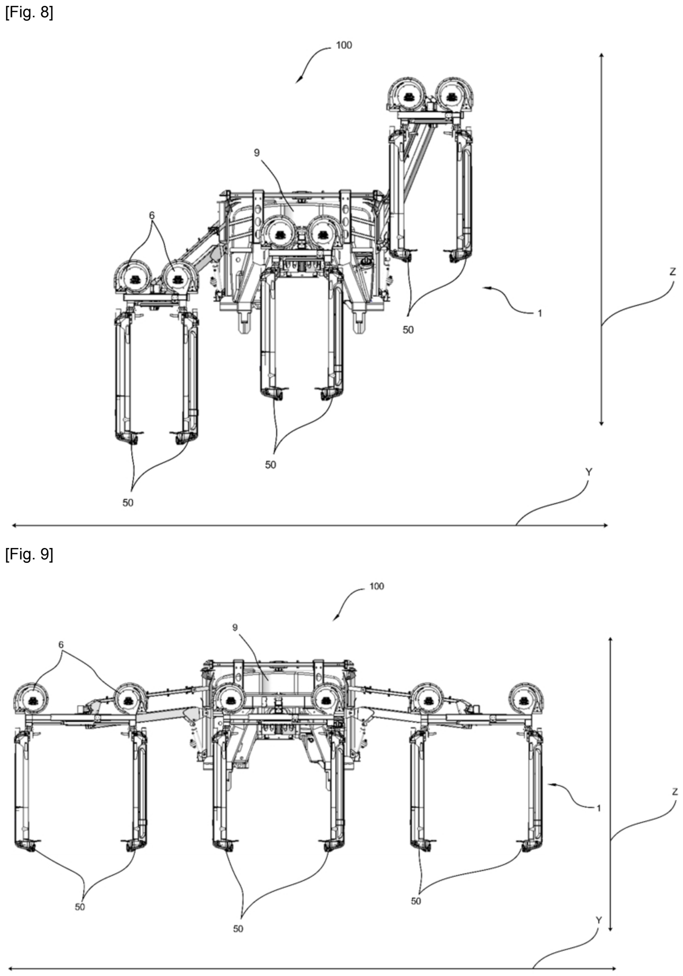

Les figures 4 et 9 montrent une vue arrière de l'unité de pulvérisation 1 avec des écartements différents entre les diffuseurs.

L'indépendance des bras des différentes paires de diffuseurs de produit de pulvérisation 50 permet également de mettre en œuvre une configuration imbriquée, selon laquelle la paire de diffuseurs centraux, situés, selon un axe transversale de l'engin agricole, entre les roues de l'engin, se trouvent ainsi avec un moindre porte à faux arrière. De plus, la largeur hors tout de l'engin agricole reste confondu dans le gabarit du porteur.

Dans une position repliée de l'unité de pulvérisation 1, la paire de diffuseurs centraux est ainsi située entre les paires de diffuseurs latéraux, latéralement, et entre l'ossature 2 et les paires de diffuseurs latéraux, longitudinalement, comme on le constate notamment sur la figure 1.

La paire de diffuseurs centraux est reliée à l'ossature 2 par l'intermédiaire du bras central 40 qui est couplé à l'ossature 2 via un parallélogramme déformable standard, avec un système de coulisse, également désigné arche télescopique 7 ci-dessus, pour gérer la largeur de travail au moyen d'une paire de vérins maître-esclave configurés pour synchroniser les mouvements et pouvoir gérer indépendamment l'entraxe des rangs de végétation et la largeur de végétation, et réduire le porte-à-faux.

Les deux paires de diffuseurs de produit de pulvérisation 50 latéraux sont aussi gérées de façon indépendante . Elles sont montées sur un parallélogramme déformable, pour le réglage en hauteur, et sur une articulation configurée pour gérer la largeur afin de disposer d'une plus grande amplitude de réglages en hauteur et en largeur.

Le réglage en hauteur permet de gérer le dévers en positif comme en négatif et aussi de positionner les diffuseurs de produit de pulvérisation 50 au-dessus de la végétation afin de permettre à l'utilisateur de faire ses demi-tours plus rapidement sans replier la totalité de sa rampe. Cela permet notamment de gérer des parcelles avec des dévers différents d'un rang à l'autre. Sur la figure 8, par exemple, le bras latéral de droite est levé au maximum, permettant de passer les diffuseurs au-dessus d'un rang de végétation, tandis que le bras latéral de gauche est abaissé, pour tenir compte d'un dévers négatif. La figure 7 montre la même configuration, en vue de côté.

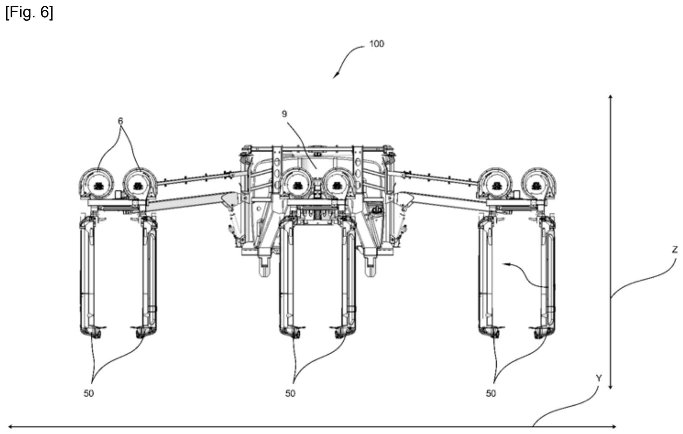

Sur les figures 6, 8, 9 et 12 notamment, on constate par ailleurs que le mode de réalisation représenté comporte des dispositifs de ventilation 6 déportés, c'est-à-dire fixés au sommet des diffuseurs de produit de pulvérisation 50, plutôt que d'avoir un unique système de ventilation plus importante associé à des gaines aérauliques pour amener les flux d'air vers chaque diffuseur de produit de pulvérisation.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

### Signes de référence :

Unité de pulvérisation : 1
Ensemble de pulvérisation : 100
Cuve : 9
Ossature : 2
Support de bras : 21
Bras latéraux : 30
Pivots pour les bras latéraux : P
Bras central : 40
Dispositif de ventilation : 6
Actionneurs de montée-descente des bras : 31
Actionneurs d'asservissement : 32
Accumulateurs : 33
Modules de diffusion de produit de pulvérisation / Diffuseurs de produit de pulvérisation : 50
Panneaux récupérateurs : 51
Buses de pulvérisation : 52
Arche télescopique : 7
Moyen télescopique du bras central : 8

## Revendications

1. Unité de pulvérisation (1), comportant une ossature (2) destinée à coopérer avec une cuve (9) pour former un ensemble de pulvérisation (100) destiné à être monté sur un porteur, tel qu'une machine à vendanger, pour former un engin agricole de pulvérisation, et au moins trois modules de diffusion de produit de pulvérisation (50), chaque module de diffusion de produit de pulvérisation (50) s'étendant principalement suivant une direction verticale (Z) par rapport au sol,
l'unité de pulvérisation agricole (1) comportant deux modules de diffusion de produit de pulvérisation (50) latéraux, de part et d'autre, et au moins un module de diffusion de produit de pulvérisation (50) central, disposé entre les modules de diffusion de produit de pulvérisation (50) latéraux, et comprenant :
- pour chaque module de diffusion de produit de pulvérisation (50), un bras (30, 40), mobile, relié à l'ossature (2) d'une part et à un module de diffusion de produit de pulvérisation (50) respectif d'autre part, chaque bras (30) étant configuré pour permettre la mobilité des modules de diffusion de produit de pulvérisation (50) par rapport au porteur,
- chaque bras (30, 40) étant relié de façon indépendante à l'ossature (2) de l'unité de pulvérisation (1) par un dispositif de parallélogramme, configuré pour monter et descendre le module de diffusion de produit de pulvérisation (50) correspondant, notamment au moyen d'un actionneur, et
- chaque bras latéral (30) étant monté sur l'ossature (2) par l'intermédiaire d'une liaison pivot (P) suivant une direction verticale (Z), pour permettre le déploiement ou le repli des modules de diffusion de produit de pulvérisation (50) latéraux suivant la direction transversale (Y).

2. Unité de pulvérisation (1) selon la revendication 1, dans laquelle les modules de diffusion de produit de pulvérisation (50) comprennent des panneaux de confinement ou des panneaux récupérateurs (51).

3. Unité de pulvérisation (1) selon l'une des revendications précédentes, dans laquelle les deux modules de diffusion de produit de pulvérisation (50) latéraux sont reliées à l'ossature (2) par des bras (30) latéraux respectifs et ledit au moins un module de diffusion de produit de pulvérisation (50) central est relié à l'ossature (2) par un bras central (40), les modules de diffusion de produit de pulvérisation (50) étant agencés suivant une architecture dite imbriquée, selon laquelle le bras central (40), situé, suivant une direction transversale (Y) de l'engin agricole de pulvérisation, entre les bras latéraux (30), est plus court que les bras latéraux (30), le module de diffusion de produit de pulvérisation (50) central étant configuré pour se situer, suivant un axe longitudinal (X) de l'engin agricole de pulvérisation, entre l'ossature (2) et les modules de diffusion de produit de pulvérisation (50) latéraux, dans une position repliée de l'unité de pulvérisation (1).

4. Unité de pulvérisation (1) selon la revendication précédente, dans laquelle, à l'extrémité opposée à celle par laquelle les bras latéraux (30) sont reliés à l'ossature (2), chaque bras latéral (30) comprend un actionneur (32) monté pivotant suivant un axe vertical (Z), relié au module de diffusion de produit de pulvérisation (50) correspondant, et asservi de sorte à conserver un parallélisme entre un axe transverse du module de diffusion de produit de pulvérisation et une direction transversale (Y) de l'engin agricole de pulvérisation, autrement dit un parallélisme entre une direction d'avancement du module de diffusion de produit de pulvérisation (50) et un rang de végétation traité.

5. Unité de pulvérisation (1) selon la revendication 3 ou 4, dans laquelle le bras central (40) comprend un moyen télescopique (8) pour ajuster la longueur dudit bras central (40) et ainsi la position relative du module de diffusion de produit de pulvérisation (50) central, suivant l'axe longitudinal (X) de l'engin agricole de pulvérisation, par rapport aux modules de diffusion de pulvérisation (50) latéraux, le moyen télescopique (8) étant commandable de sorte à assurer un alignement des modules de diffusion de produit de pulvérisation (50) latéraux et central, suivant une direction transversale (Y) de l'engin agricole de pulvérisation.

6. Unité de pulvérisation (1) selon l'une des revendications 3 à 5, dans laquelle les bras latéraux (30) présentent un point d'attache respectif à l'ossature (2) et le bras central (40) présente un point d'attache à l'ossature (2), le point d'attache des bras latéraux (30) étant plus éloigné des modules de diffusion de produit de pulvérisation (50) correspondants que le point d'attache du bras central (40), les bras latéraux (30) étant ainsi plus longs que le bras central (40), notamment au moins deux fois plus long.

7. Unité de pulvérisation (1) selon l'une des revendications précédentes, dans lequel au moins un module de diffusion de produit de pulvérisation est une paire de diffuseurs de produit de pulvérisation, les diffuseurs de produit de pulvérisation de chaque paire de diffuseurs de produit de pulvérisation étant configurés pour s'éloigner et se rapprocher latéralement l'un de l'autre, selon une direction transversale (Y) de l'engin agricole de pulvérisation, une arche télescopique (8) contrôlant l'écartement entre les diffuseurs de pulvérisation de ladite au moins une paire de diffuseurs de produit de pulvérisation.

8. Unité de pulvérisation (1) selon la revendication précédente, dans laquelle l'arche télescopique (8) comporte un seul actionneur.

9. Unité de pulvérisation (1) selon l'une des revendications précédentes, dans laquelle un moyen d'amortissement réglable en détente et en compression, notamment avec des duretés différentes, par exemple un accumulateur (33), est couplé à chaque actionneur.

10. Unité de pulvérisation (1) selon l'une des revendications précédentes, comprenant un dispositif de ventilation (6) monté au sommet de chaque module de diffusion de produit de pulvérisation (50).

11. Ensemble de pulvérisation (100) comportant une cuve (9) et une unité de pulvérisation (1) selon l'une des revendications précédentes, l'unité de pulvérisation (1) étant configurée pour être reliée au porteur.

12. Engin agricole de pulvérisation comportant un porteur et un ensemble de pulvérisation (100).
